# EUROPÄISCHE PATENTSCHRIFT

(11) **EP 0 364 615 B1**
(45) Veröffentlichungstag und Bekanntmachung des Hinweises auf die Patenterteilung: **10.02.1993**
(21) Anmeldenummer: 88117293.6
(22) Anmeldetag: 18.10.1988
(51) Int. Cl.: F16L 19/08

(54) **Rohrverbindung und ihre Verwendung für Sprinkleranlagen**
Pipe coupling and its use for sprinkler installations
Raccord de tuyaux et son emploi pour des installations d'arrosage

(43) Veröffentlichungstag der Anmeldung: 25.04.1990
(73) Patentinhaber: Vieregge, Uwe, D-63584 Gründau (DE)
(72) Erfinder: Vieregge, Uwe, D-63584 Gründau (DE)
(74) Vertreter: Müller-Wolff, Thomas, Dipl.-Ing.

(56) Entgegenhaltungen:
- DE-A- 2 617 832
- DE-A- 3 508 296
- FR-A- 1 556 413
- FR-A- 2 579 292
- US-A- 2 225 208

## Beschreibung

Die Erfindung betrifft eine Rohrverbindung zwischen zwei stumpf miteinander zu verbindenden Rohrenden A/B oder zur Herstellung winklig abzweigender Verbindungen C, wobei die zu verbindenden Teile A,B,C jeweils einen oder mehrere Federringe mit nach innen gleichmäßig über den Umfang verteilten Schlitzen aufweisen, die sich bei über Spannschrauben vermittelter Spannung zwischen den Spanngehäusen aufrichten und in die Oberflächen der zu kuppelnden Teile eindringen, wobei neben den Federringen Elastomerkörper angeordnet sind sowie ihre Verwendung zur Ankupplung von Teilen für Sprinkleranlagen.

Eine Rohrverbindung der eingangs genannten Art ist aus der FR-A-1556413 bekannt. Hierbei werden die Rohrenden mit einem dazwischen angeordneten Absperrorgan über Spannschrauben (6) und Flanschteile (5a, 5b) verbunden. Auf jedem Rohrende ist mindestens ein Federring angeordnet, der mit einem oder mehreren elastischen Dichtringen (8) in Kontakt steht. Die Dichtringe werden in die zu dem jeweiligen Flanschteil (5a, 5b) gehörenden Vertiefungen (4a, 4b) eingepreßt. Der zwischen den Rohrenden (1a, 1b) herrschende Innendruck wirkt über die zwischen dem Absperrorgan (2) und den Rohrenden (1a, 1b) bestehenden Spalte auf die Dichtringe (8) ein.

Bei ungleichmäßiger Ausrichtung der Federringe (9) können hierbei Undichtigkeiten auftreten. Die Federringe (9) schneiden sich in die Oberfläche der Rohrenden (1a, 1b) ein und bilden dadurch eine unlösbare Verbindung mit diesen.

Aus US-A-2225208 ist eine Rohrverbindung mit mehreren Federringen bekannt, die gleichmäßig über den Umfang verteilte Schlitze aufweist, wobei die Federringe durch einen zwischen zwei Schlitzen angeordneten Schnitt geöffnet sind. Die zu verbindenden Rohrteile werden von einem Elastomerkörper übergriffen, wobei über einen zwischen den Rohrenden angeordneten Spalt der im Rohrinneren befindliche Druck in eine Nut des Elastomerkörpers hineinwirkt und diesen gegen die Dichtfläche eines Spanngehäuses anpreßt. Ein Trennen und Auswechseln der Rohrverbindungsteile ist durch die Anordnung der Federringe im Gehäuse nicht möglich.

Aufgabe der vorliegenden Erfindung ist es, bei einer Rohrverbindung der eingangs genannten Art das Einhalten der axialen oder winkligen Ausrichtung der Teile auch nach dem Trennen und Auswechseln der Rohrverbindungsteile zu ermöglichen und gleichzeitig die sich einstellenden Druck- oder Schubkräfte aufzunehmen ohne gleichzeitig die Dichtigkeit der Verbindung zu vermindern.

Die Lösung dieser Aufgabe erfolgt erfindungsgemäß durch die in dem Hauptanspruch angegebenen Merkmale. Weitere vorteilhafte Lösungen sind in den Unteransprüchen aufgezeigt.

Es ist daran gedacht, daß die den Teilen A bis C aufstehenden Lappen zur Erleichterung des Eindringens in diese geschärft werden.

Die geöffneten Federringe lassen sich ohne besondere Kraftanwendung auf die Enden der zu verbindenden Teile aufschieben.
Die Federringe und der beide zu kuppelnden Teile übergreifende Elastomerkörper wird bei der Herstellung von geradlinig sich fortsetzenden Kupplungsteilen durch zwei Spanngehäuse umfaßt und durch Anziehen der Spannschrauben eine Spannung zwischen den Spanngehäusen vermittelt, die auf die Federringe übertragen wird.
Diese richten sich unter Belastung auf und verzahnen sich in den Oberflächen der zu kuppelnden Teile.

Es ist dabei vorgesehen, daß die Oberfläche der inneren Abmessungen der Spanngehäuse härter als die der zu kuppelnden Teile ist.

Dies hat den Vorteil, daß die Verzahnung jeweils nur in das zu kuppelnde Teil eindringen kann.

Zur Ausbildung der Federringe wird vermerkt, daß diese jeweils durch einen zwischen zwei Schlitzen angeordneten Schnitt geöffnet sind und einen durch die Schnittkanten, in Verbindung mit der Eigenspannung der Federringe, radial gerichteten Spalt bilden.

Bei Ausbildung der Spannschelle mit ihrer mindestens einseitig in ein Langloch einschwenkbaren, rastbaren Spannschraube des Spanngehäuses wird durch Anziehen der Spannschrauben des Spannflansches eine Spannung erzeugt, wobei diese partiell durch die Rippen und die Stützen zusätzlich abgefangen wird.

Die Rohrverbindung dient im wesentlichen der Verbindung von Rohrleitungen jeder Art, insbesondere aber auch zur Kupplung von Teilen zu Sprinkleranlagen zumindest für die Verbindung 20 bis 300 mm.

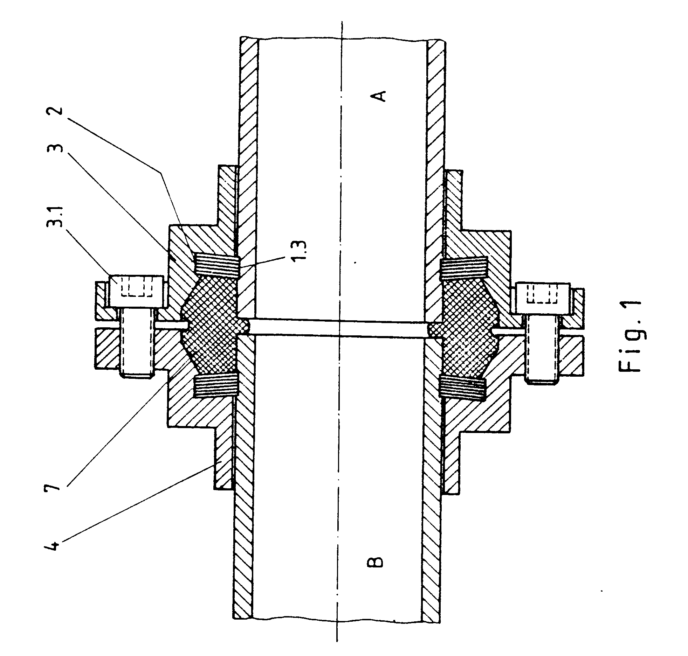

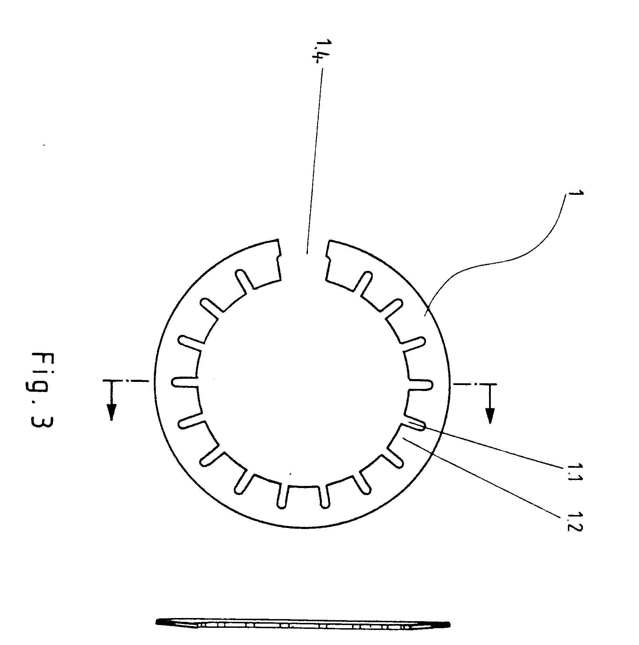

Die erfindungsgemäße Rohrverbindung wird beispielsweise durch die Figuren 1 bis 3 näher erläutert.
- Figur 1 zeigt: die Kupplung von sich geradlinig fortsetzenden Teilen A und B.
- Figur 2 zeigt: eine Kupplung von winklig abzweigenden Teilen C - d.h. einen T-Abzweig von einem geradlinig verlaufenden Strang A oder B.
- Figur 3 zeigt: einen geöffneten Federring mit über den Umfang gleichmäßig verteilten Schlitzen, der durch einen, zwischen zwei Schlitzen angeordneten Schnitt, in Verbindung mit der Eigenspannung des Federringes, einen radial gerichteten Spalt bildet.

Die Verbindung von geradlinig sich fortsetzenden Teilen A und B erfolgt über Federringe 1, die den zu kuppelnden Teilen A und B jeweils aufgeschoben und einem gemeinsamen Elastomerkörper 7 aufliegen.

Das rechte und das linke Spanngehäuse 3 und 4 umfaßt jeweils die Federringpakete 1 und nimmt jeweils anteilig die Länge des Elastomerkörpers 7 auf.

Durch Anzug der Spannschrauben 3.1 werden die Federringe 1 senkrecht gestellt, wobei die Lappen 1.2 in die Oberfläche der Teile A und B eindringen und eine positive Verzahnung 1.3 bilden.

In diesem Zusammenhang ist es wichtig, daß die innere Oberfläche 2 der Spanngehäuse 3/4 härter als die der zu kuppelnden Teile A bis C ist.

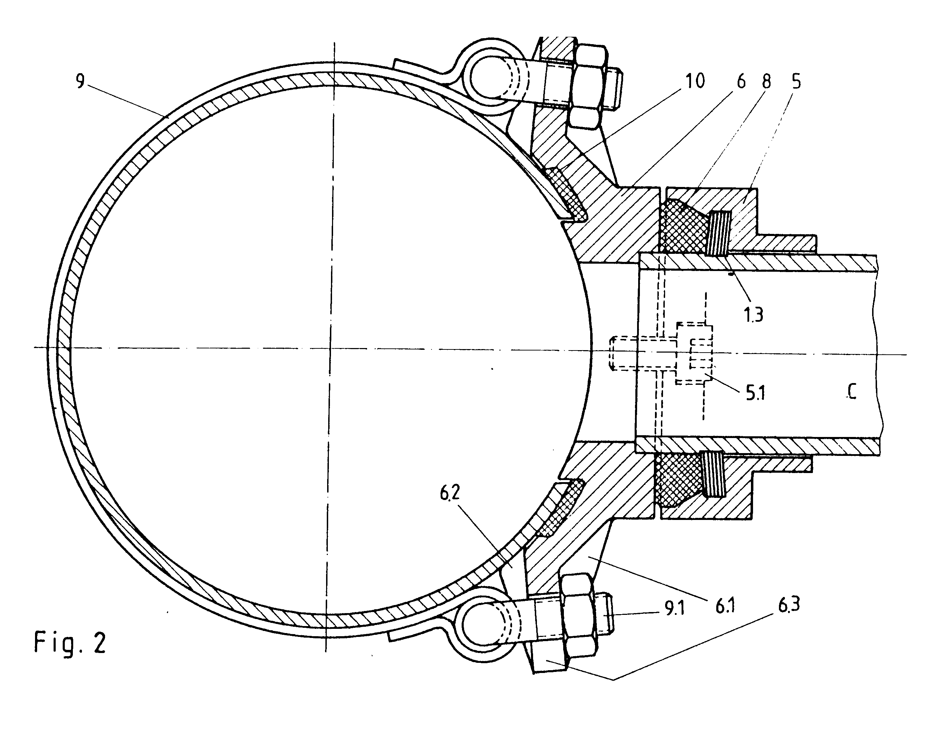

Diese Ausführungen gelten in gleicher Weise für die Herstellung eines Abzweiges C (T-Stück nach Figur 2), für das Spanngehäuse 5, wobei hier die Spannung, ausgehend von den Spannschrauben 5.1,in Verbindung mit den Federringen 1 vermittelt wird. Der mit dem Spanngehäuse 5 korrespondierende Spannflansch 6 nimmt eine Dichtung 10 sowie die Verlängerung des Abzweiges C auf, wobei der Elastomerkörper 8 um ein geringes Maß von einer Vertiefung im Spannflansch 6 aufgenommen wird.
Das Spanngehäuse 3/4 wird durch die Spannschelle 9 gehalten.

Zur Spannschelle 9 wird bemerkt, daß im Spannflansch 6 zumindest ein Langloch 6.3 vorgesehen ist, in das die schwenkbar, rastbare Spannschraube 9.1 eingeschwenkt und durch Zug dieser Schraube das Spanngehäuse 5 auf einen der Teile C abdichtend fixiert wird und hierbei die Spannung partiell durch die Rippen 6.1 und die Stützen 6.2 zusätzlich abgefangen wird.

## Patentansprüche

1. Rohrverbindung zwischen zwei stumpf miteinander zu verbindenden Rohrenden (A/B) oder zur Herstellung winklig abzweigender Verbindungen (C), wobei die zu verbindenden Teile (A,B,C) jeweils einen oder mehrere Federringe (1) mit nach innen gleichmäßig über den Umfang verteilten Schlitzen (1.1) aufweisen, die sich bei über Spannschrauben (3.1) vermittelter Spannung zwischen den Spanngehäusen (3,4,5) aufrichten und in die Oberflächen der zu kuppelnden Teile (A,B,C) eindringen, wobei neben den Federringen (1) Elastomerkörper angeordnet sind,
wobei die Federringe (1), die den zu kuppelnden Teilen (A,B) jeweils aufgeschoben sind, einem gemeinsamen Elastomerkörper (7) aufliegen, der die Teile (A,B) übergreift, wobei ein zweiteiliges Spanngehäuse (3,4) die Federringe (1) umfaßt und anteilig die Länge des Elastomerkörpers (7) aufnimmt,
und die Federringe (1) jeweils durch einen zwischen zwei Schlitzen (1.1) angeordneten Schnitt geöffnet sind und einen durch die Schnittkante, in Verbindung mit der Eigenspannung der Federringe (1), radial gerichteten Spalt (1.4) bilden,
und die neben dem Elastomerkörper in dem Hohlraum des Spanngehäuses (3,4,5) angeordneten Federringe (1) durch Anzug der Spannschrauben (3.1) senkrecht gestellt werden, wobei die zwischen den Schlitzen (1.1) angeordneten Lappen (1.2) in die Oberfläche der Teile (A,B) eindringen.

2. Rohrverbindung nach Anspruch 1, dadurch gekennzeichnet,
**daß** die Oberfläche (2) der Spanngehäuse (3,4,5) härter als die zu verbindenden Teile (A,B,C) ist.

3. Rohrverbindung nach einem der vorhergehenden Ansprüche, dadurch gekennzeichnet,
**daß** bei Ausbildung einer winklig abzweigenden Verbindung (C) eine Spannschelle (9) mit einer mindestens einseitig in ein Langloch (6.3) einschwenkbaren, rastbaren Spannschraube (9.1) am Spanngehäuse (5) über einen Spannflansch (6) befestigt ist, wobei Rippen (6.1) und Stützen (6.2) zum Abfangen der Spannung zwischen Spannflansch und Spanngehäuse vorgesehen sind.

4. Verwendung einer Rohrverbindung nach einem der vorhergehenden Ansprüche zur Ankupplung von Teilen für Sprinkleranlagen, wobei das Anschlußrohr der Sprinkleranlage mit einem Durchmesser von 20 bis 300 mm als Teil der Rohrverbindung (A,B oder C) eingesetzt wird.

## Claims

1. Tube joint between two butt ended tubes (A/B) or for producing angularly diverging joints (C) whereby the parts to be joined together (A,B,C) have one or more spring washers (1) possessing inwardly directed, evenly distributed around the circumference, slits (1.1) which, when the bolts (3.1) are tightened, are caused, due to stress distribution between the fittings (3,4,5), to align themselves and press into the surfaces of the parts to be joined together, whereby next to the spring washers (1) is to be found an elastomer body,
whereby the spring washers (1), which are pushed onto the parts (A,B) to be joined together, have a joint elastomer body (7) which extends over the parts (A,B), whereby a two part fitting (3,4) encases the spring washers (1) and subsequently the length of the elastomer body (7),
and the spring washers (1) have between two slits (1.1) an opening and the cut edges in connection with the internal stress of the spring washers (1.1) form a radially orientated gap (1.4),
and the spring washers (1), next to the elastomer body within the fittings (3,4,5), become perpendicularly aligned during tightening of the bolts (3.1), whereby the segments (1.2) between the slits (1.1) press into the surfaces of the parts (A,B).

2. Tube joint after claim 1, characterised by,
that the surfaces (2) of the fittings (3,4,5) are harder than those of the parts to be joined together (A,B,C).

3. Tube joint after the previous claims, characterised by,
that the formation of an angularly diverging joint (C) a clamp (9) with at least, on one side, in a longitudinal slot (6.3), a moveable, fixable bolt (9.1) is connected to the fitting (5) through a flange (6), whereby ribs (6.1) and supports (6.2) are present to reduce the stress between the flange and the fitting.

4. Use of a tube joint after one of the previous claims for connecting parts for sprinkler equipment, whereby the connecting tube of the sprinkler equipment has a diameter of between 20 and 300 mm and is used as a part of the joint (A,B or C).

## Revendications

1. Raccord à tubes destiné à être placé entre 2 embouts (A/B) joints bord à bord ou à l'établissement de noeuds d'empattement (C), les parties destinées à être unies (A, B, C) étant munies chacune de une ou plusieurs rondelles-ressort (1) possédant sur leur périmètre intérieur des encoches (1.1) réparties régulièrement le long de celui-ci et qui, du fait de l'effort de tension appliqué à l'aide des vis de serrage (3.1) sur les manchons de serrage (3, 4, 5), se redressent et s'encastrent dans les surfaces des parties à unir (A, B, C), des corps en élastomère étant disposés à côté des rondelles-ressort (1), les rondelles-ressort (1) qui sont enfilées sur chacune des pièces à unir (A, B) étant juxtaposées à un corps en élastomère commun qui s'engage sur les pièces (A, B), un manchon de serrage en deux parties (3, 4) enserrant les rondelles-ressort (1) et chaque demi-corps du manchon formant un logement pour le corps en élastomère sur la longueur correspondante, et chacune des rondelles-ressort (1) étant sectionnée par une coupe située entre deux encoches (1.1) occasionnant le long de l'arête de coupe une fente radiale (1.4) formée par les contraintes internes des rondelles-ressort (1)
et les rondelles-ressort (1) juxtaposées au corps en élastomère dans le logement du manchon de serrage (3, 4, 5) étant érigées par l'action de serrage des vis de serrage (3.1), les languettes (1.2) situées entre les encoches (1.1) pénétrant dans la surface des pièces (A, B)

2. Dispositif d'accouplement de tubes selon la revendication 1 caractérisé en ce que
la surface (2) du manchon d'accouplement (3, 4, 5) est plus dure que les pièces à accoupler (A, B, C).

3. Dispositif d'accouplement de tubes suivant l'une des revendications précédentes caractérisé en ce que
dans le cas de l'établissement d'un noeud d'accouplement (C), un collier de serrage (9), muni d'une vis de serrage (9.1) verrouillable et pivotante dans un trou oblong (6.3) situé au moins sur un côté, est fixé au manchon d'accouplement (5) par un collet de serrage (6), des nervures (6.1) et des étriers (6.2) étant prévus pour résister à la tension appliquée entre le collet de serrage et le manchon de serrage.

4. Utilisation d'un dispositif d'accouplement de tubes suivant l'une des revendications précédentes pour permettre l'accouplement de sections de réseaux de sprinkler, le tuyau d'alimentation du réseau de sprinkler d'un diamètre de 20 à 300 mm étant une partie du raccord de tube (A, B ou C).
